# EUROPÄISCHE PATENTSCHRIFT

(11) **EP 1 745 991 B1**
(45) Veröffentlichungstag und Bekanntmachung des Hinweises auf die Patenterteilung: **29.12.2010**
(21) Anmeldenummer: 06116561.9
(22) Anmeldetag: 04.07.2006
(51) Int. Cl.: B60R 21/233

(54) **Fahrzeuginsassen-Rückhaltesysteme mit einem Gassack**
Vehicle passenger restraint system with an airbag
Système de retenue d'un passager d'un véhicule avec un coussin gonflable

(30) Priorität: 18.07.2005 DE 102005034249
(43) Veröffentlichungstag der Anmeldung: 24.01.2007
(73) Patentinhaber: TAKATA - PETRI AG, 63743 Aschaffenburg (DE)
(72) Erfinder: Riedel, Andreas, 89257, Illertissen (DE); Schaupp, Jochen, 73431, Aalen (DE); Gutmann, Ralf, 89075, Ulm (DE); Glöckler, Oliver, 89278, Nersingen (DE)
(74) Vertreter: Baumgärtel, Gunnar

(56) Entgegenhaltungen:
- EP-A2- 1 486 384
- WO-A-00/71389
- WO-A-03/043859
- US-A- 3 900 210
- US-A- 4 592 588

## Beschreibung

Die Erfindung betrifft Fahrzeuginsassen-Rückhaltesysteme gemäß den Oberbegriffen der Ansprüche 1 und 4, ein Verfahren zum Verteilen von Gas zwischen zwei Gassackkammern eines Gassacks sowie ein Verfahren zum Erhöhen des Innendruckes in einem Teilbereich eines Gassacks.

Es sind allgemein mehrteilige Gassäcke für Fahrzeuginsassen-Rückhaltesysteme bekannt, die mindestens eine erste und eine zweite Gassackkammer aufweisen. Derartige Mehrkammer-Gassäcke werden beispielsweise in Seitenairbag-Systemen eingesetzt, wobei der Gassack beispielsweise eine Thorax-Kammer und eine Kopf-Kammer bildet. Ein derartiger Mehrkammer-Gassack ist in der US 5-A-5,718,450 beschrieben.

Die EP 1 375 262 A1 und die EP 0 835 193 B1 beschreiben Airbagsysteme, bei denen sich im Inneren einer Hauptkammer eines Gassackes ein Innensack oder ein Schlauch befindet, der bei einem Entfalten des Gassackes nach außen gestülpt wird. Die nach außen gestülpten Teile weisen dabei eine Ausströmöffnung auf. Der Sinn der beschriebenen Airbagsysteme besteht darin, ein Ausströmen von Gas aus einer Ausströmöffnung zeitversetzt bereitzustellen, indem die innen angeordneten Bereiche zunächst nach außen gestülpt werden müssen.

Aus der EP 1 022 198 A1 ist ein Airbagsystem bekannt, bei dem eine Ausströmöffnung eines Gassacks an seiner Außenseite mit einer elastischen Membran verschlossen ist. Die elastische Membran dehnt sich, ohne sich dabei vom Gassack zu trennen, im Falle einer Interaktion des Gassacks mit einem Fahrzeuginsassen und einer damit einhergehenden Druckerhöhung im Gassack. Das bereitgestellte Ausgleichsvolumen ist dabei gering.

Die DE 100 18 170 A1 beschreibt eine Luftsackanordnung für Kraftfahrzeuge mit einem aufblasbaren Luftsack, dessen Ausdehnung im OOP-Fall durch eine Begrenzungshülle begrenzt wird. Im Normalschutzfall reißt die Begrenzungshülle aufgrund eines in diesem Fall höheren Innendruckes im Luftsack.

Die WO 00/71389 A1 beschreibt ein Fahrzeuginsassen-Rückhaltesystem gemäß den Oberbegriffen der Ansprüche 1 und 4. Das Fahrzeuginsassen-Rückhaltesystem betrifft einen Frontairbag und weist in einer Ausführungsvariante eine Hauptkammer und eine elastische Gassackkammer auf. Die elastische Gassackkammer ist derart ausgebildet, dass sie in unmittelbare Interaktion mit einem Fahrzeuginsassen treten kann. In einer weiteren Ausführungsvariante der WO 00/71389 A1 ist ein Nebenbag beschrieben, der derart angeordnet ist, dass er nicht in Interaktion mit einem Fahrzeuginsassen treten kann.

Der vorliegenden Erfindung liegt die Aufgabe zugrunde, Fahrzeuginsassen-Rückhaltesysteme mit Gassäcken zur Verfügung zu stellen, die in intelligenter Weise eine funktionelle Wechselwirkung zwischen verschiedenen Teilbereichen oder Kammern eines Gassackes bereitstellen, wenn nur einer der Teilbereiche oder Kammern in Interaktion mit einem Fahrzeuginsassen tritt. Des Weiteren liegt der Erfindung die Aufgabe zugrunde, einfache und effektive Verfahren zum Verteilen von Gas zwischen zwei Gassackkammern eines Gassacks und zum Erhöhen des Innendruckes in einem Teilbereich eines Gassacks bereitzustellen.

Diese Aufgabe wird durch ein Fahrzeuginsassen-Rückhaltesystem mit den Merkmalen des Anspruchs 1, ein Fahrzeuginsassen-Rückhaltesystem mit den Merkmalen des Anspruchs 4, ein Verfahren um Verteilen von Gas zwischen zwei Gassackkammern eines Gassacks mit den Merkmalen des Anspruchs 3 und ein Verfahren zum Erhöhen des Innendruckes in einem Teilbereich eines Gassacks mit den Merkmalen des Anspruchs 9 gelöst. Vorteilhafte und bevorzugte Ausgestaltungen der Erfindung sind in den Unteransprüchen angegeben.

Danach ist gemäß einer ersten Variante der vorliegenden Erfindung vorgesehen, dass in einem mehrteiligen Gassack mit mindestens einer ersten und einer zweiten Gassackkammer die erste und die zweite Gassackkammer derart miteinander verbunden sind, dass in Abhängigkeit von den vorliegenden Innendrücken Gas von der ersten Gassackkammer in die zweite Gassackkammer und Gas von der zweiten Gassackkammer in die erste Gassackkammer strömen kann. Mit anderen Worten kann, sofern der Innendruck in der ersten Gassackkammer größer ist als der Innendruck in der zweiten Gassackkammer, Gas in die zweite Gassackkammer strömen, und kann, sofern der Innendruck in der zweiten Gassackkammer größer ist als der Innendruck in der ersten Gassackkammer, Gas in die erste Gassackkammer strömen. Des Weiteren ist die zweite Gassackkammer mit einer elastischen Wandung versehen, also als elastische Gassackkammer ausgebildet.

Dies ermöglicht es, dass beispielsweise bei einer erhöhten Belastung der ersten Gassackkammer bei Intrusion oder bei einer Interaktion mit einem Fahrzeuginsassen und einem damit einhergehenden erhöhten Innendruck in der ersten Gassackkammer Gas aus dieser in die zweite Gassackkammer gedrückt wird (bis in beiden Kammern der gleiche Innendruck vorliegt), wobei sich die zweite Gassackkammer, die elastisch ausgebildet ist, aufbläst. Die elastische Ausbildung der zweiten Gassackkammer weist dabei den weiteren Vorteil auf, dass bei einer Entlastung der ersten Gassackkammer Gas der zweiten Gassackkammer zurück in die erste Gassackkammer gedrückt wird. Hierdurch stellt der Gassack auch bei einem zusätzlichen Aufprall oder Schlag weiterhin eine Schutzfunktion bereit. Bei bekannten Gassäcken strömt das der Energieabsorption dienende Gas nach dem ersten Aufprall durch im Gassack vorgesehene Ausströmöffnungen dagegen irreversibel ab, so dass nur für den ersten Aufprall eine Schutzfunktion bereitgestellt wird.

Es ist dabei möglich, dass die erste Gassackkammer und die zweite Gassackkammer durch ein druckgesteuertes Ventil miteinander verbunden sind, somit erst ab einem vorbestimmten Druck in der ersten Gassackkammer Gas von der ersten Gassackkammer in die zweite Gassackkammer strömt. Nach dem Öffnen dieses Ventils kann dann aber Gas in beiden Richtungen zwischen den Gassackkammern hin- und her strömen, so dass bei einer Reduzierung des Druckes in der ersten Gassackkammer Gas aus der zweiten Gassackkammer in die erste Gassackkammer zurückströmen und dort den Druck wieder erhöhen kann.

In einer alternativen Ausgestaltung sind die erste Gassackkammer und die zweite Gassackkammer jedoch von vornherein beispielsweise über eine Verbindungsöffnung miteinander verbunden, so dass zu jedem Zeitpunkt Gas zwischen den beiden Gassackkammern strömen kann.

Der erfindungsgemäße Gassack ist als Seitenairbag ausgebildet, der in die Sitzlehne eines Fahrzeugsitzes integriert ist. Die zweite Gassackkammer des sich entfaltenden Gassackes erstreckt sich dabei zwischen der Sitzlehne und einer zugehörigen seitlichen Fahrzeugstruktur, z.B. einer Fahrzeugtür oder einer Fahrzeugsäule.

Weiter ist die zweite Gassackkammer erfindungsgemäß derart ausgebildet und im Fahrzeug positioniert, dass sie nicht in Interaktion mit einem Fahrzeuginsassen treten kann. Es handelt sich bei der zweiten Gassackkammer um eine reine Ausgleichskammer.

Ein erfindungsgemäßes Verfahren zum Verteilen von Gas zwischen zwei Gassackkammern eines Gassacks unter Verwendung einer elastischen Gassackkammer sieht die folgenden Schritte vor:
- Bereitstellen eines Gassacks mit mindestens einer ersten Gassackkammer und einer zweiten Gassackkammer, wobei die zweite Gassackkammer eine elastische Wandung aufweist,
- Anordnen des Gassacks in einem Fahrzeug derart, dass die erste Gassackkammer im Auslösefall in Interaktion mit einem Fahrzeuginsassen tritt,
- im Auslösefall, Bereitstellen eines Innendruckes zumindest in der ersten Gassackkammer, wobei Gas mittels eines Inflators zunächst in die erste Gassackkammer eingeführt wird,
- bei Intrusion oder Belastung der ersten Gassackkammer, Strömen von Gas von der ersten Gassackkammer in die zweite Gassackkammer, wobei die zweite Gassackkammer elastisch expandiert,
- bei Wegfall der Intrusion oder Belastung der ersten Gassackkammer, Strömen von Gas von der zweiten Gassackkammer zurück in die erste Gassackkammer.

Gegebenenfalls kann dieses Verfahren auch mehrfach realisiert werden, wobei bei mehreren aufeinanderfolgenden Aufprallvorgängen zwischen den beiden Kammern hinund herströmt. Dies ist möglich, da das Gas nach dem ersten Aufprall nicht durch Ausströmöffnungen abgelassen, sondern in einer elastischen Zusatzkammer gewissermaßen zwischengespeichert wird.

Eine zweite Variante der erfindungsgemäßen Lösung sieht vor, dass bei einem Fahrzeuginsassen-Rückhaltesystem mit einem mindestens zwei Teilbereiche aufweisenden Gassack ein Teilbereich derart ausgebildet und im Fahrzeug positioniert ist, dass er zum einen nicht in Interaktion mit einem Fahrzeuginsassen treten kann und zum anderen durch mindestens ein intrudierendes Fahrzeugteil komprimierbar ist, wobei im Falle einer Intrusion des Fahrzeugteils Gas in den anderen Teilbereich geleitet wird und dort den Innendruck erhöht. Beispielsweise ist der eine Teilbereich benachbart der B-Säule des Fahrzeuges, insbesondere zwischen B-Säule und Fahrzeugsitz angeordnet, so dass er bei einer Intrusion der B-Säule (etwa bei einem Seitenaufprall eines anderen Fahrzeuges) komprimiert wird.

Diese Erfindungsvariante erlaubt es, den Teilbereich des Gassacks, der im Auslösefall in Interaktion mit einem Fahrzeuginsassen tritt (im folgenden auch als Hauptbereich oder als Hauptkammer bezeichnet), nur mit einem vergleichsweise geringen Druck mit Gas zu befüllen. Lediglich im Kollisionsfall, wenn durch das intrudierende Fahrzeugteil der eine Teilbereich komprimiert und sein Gas zumindest teilweise in den Hauptbereich geleitet wird, erhöht sich in dem Hauptbereich, der in Interaktion mit einem Fahrzeuginsassen tritt, der Druck. Bei fehlender Intrusion oder bei einer Fehlauslösung des Airbagsystems befindet sich der Druck in der Hauptkammer somit auf einem niedrigen Niveau, so dass OOP-Situationen unkritisch sind, d.h., ein Fahrzeuginsasse im OOP-Fall aufgrund des geringen Druckniveaus des Hauptbereichs nicht mit Verletzungen zu rechnen hat. Bei einer ernsten Kollision, die zu einer Intrusion eines Fahrzeugteiles führt, wird der Gasinnendruck des Hauptbereichs dagegen erhöht, so dass eine erhöhte Energieabsorption durch den Gassack möglich ist.

In einer bevorzugten Ausführungsform der zweiten Erfindungsvariante sind der erste Teilbereich und der zweite Teilbereich des Gassacks durch zwei Gassackkammer gebildet, wobei die Gassackkammer, die den ersten Teilbereich bildet, als Hauptkammer dient und die Gassackkammer, die den zweiten Teilbereich bildet, als Zusatzkammer dient. Die beiden Gassackkammern sind durch eine für das strömende Gas offene Verbindung miteinander verbunden.

Die Ausbildung des ersten oder zweiten Teilbereiches durch zwei gesonderte Gassackkammern ist lediglich optional. Ebenso ist es möglich, dass die beiden Teilbereiche in einer einzigen Gassackkammer oder, sofern der Gassack nur eine Gassackkammer enthält, in einem einzigen Gassack realisiert sind. Die Teilbereiche sind dann unterschiedliche dreidimensionale Bereiche des Gassacks. Auch bei Verwendung nur eines Gassacks erfolgt durch die Volumenreduzierung desjenigen Teilbereichs, der durch das intrudierende Fahrzeugteil komprimiert wird, eine Druckerhöhung in dem anderen Teilbereich, der in Interaktion mit einem Fahrzeuginsassen tritt.

Ein erfindungsgemäßes Verfahren zum Erhöhen des Innendruckes in einem Teilbereich eines Gassacks, der im Auslösefall in Interaktion mit einem Fahrzeuginsassen tritt, weist die folgenden Schritte auf:
- Bereitstellen eines Gassacks mit mindestens einem ersten Teilbereich und einem zweiten Teilbereich,
- Anordnen das Gassacks in einem Fahrzeug derart, dass der zweite Teilbereich des entfalteten Gassacks nicht in Interaktion mit einem Fahrzeuginsassen treten kann und durch ein intrudierendes Fahrzeugteil komprimierbar ist, und der erste Teilbereich im Auslösefall in Interaktion mit einem Fahrzeuginsassen tritt,
- im Auslösefall, Bereitstellen eines bestimmten Innendruckes im ersten Teilbereich, und
- bei Intrusion des Fahrzeugteils Erhöhen des Innendruckes in dem ersten Teilbereich durch Gas, dass aus dem zweiten Teilbereich in den ersten Teilbereich strömt.

Ein niedriger, OOP-unkritischer Druck wird dabei zunächst in dem ersten Teilbereich des Gassackes im Auslösefall bereitgestellt. Bei Intrusion des betrachteten Fahrzeugteils wird dieser Druck durch Gas, das aus dem zweiten Teilbereich aufgrund der Intrusion ausströmt, erhöht. Es werden somit durch das Verfahren zwei gewünschte Innendrücke bereitgestellt, zunächst ein erster reduzierter Innendruck, der OOP-unkritisch ist, sowie ein zweiter erhöhter Innendruck, der bei einer Kollision mit Intrusion von Fahrzeugteilen einhergeht.

Die Erfindung wird nachfolgend unter Bezugnahme auf die Figuren anhand mehrerer Ausführungsbeispiele näher erläutert. Es zeigen:
- Figur 1: schematisch ein Fahrzeuginsassen-Rückhaltesystem mit einem Gassack, der eine Hauptkammer und eine elastische Zusatzkammer aufweist;
- Figur 2: schematisch einen in einer Fahrzeuglehne angeordneten Seitenairbag, der eine Hauptkammer und eine Zusatzkammer ausbildet, wobei letztere durch intrudierende Fahrzeugteile komprimierbar ist; und
- Figur 3: schematisch ein Fahrzeuginsassen-Rückhaltesystem entsprechend der Figur 2, wobei statt eines Zweikammer-Gassackes ein einteiliger Gassack verwendet wird.

Die folgenden Figuren zeigen jeweils ein Fahrzeuginsassen-Rückhaltesystem mit einem Gassack. Das Fahrzeuginsassen-Rückhaltesystem weist neben dem dargestellten Gassack weitere typische Elemente eines Fahrzeuginsassen-Rückhaltesystems auf, wie insbesondere einen Gasgenerator, Airbagsensoren und eine Steuervorrichtung. Des weiteren kann das Rückhaltesystem in Abhängigkeit von der konkreten Implementierung Elemente wie einen Diffusor, eine Gaslanze oder ein Gehäuse aufweisen. Solche Elemente sind in den Figuren nicht gesondert dargestellt, da sie dem Fachmann wohlbekannt sind.

Es wird weiter darauf hingewiesen, dass die im folgenden beschriebenen Gassäcke in beliebiger Weise, insbesondere als Frontalairbag für den Fahrer, als Frontalairbag für den Beifahrer oder als Seitenairbag ausgebildet sein können.

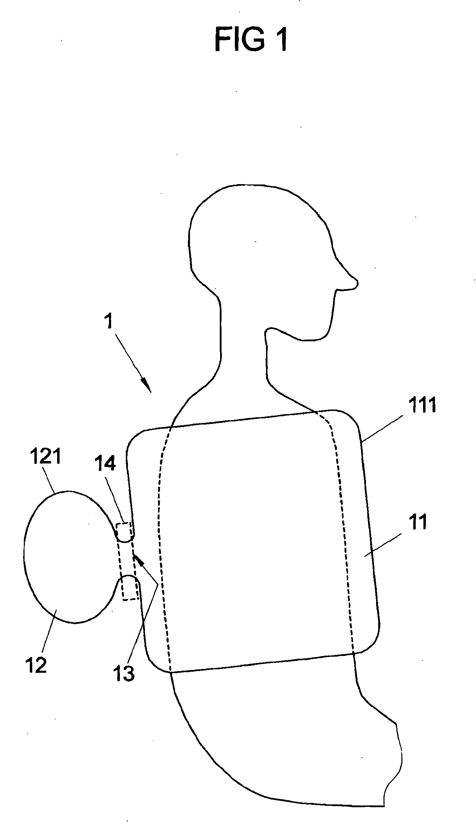

Die Figur 1 zeigt ein Fahrzeuginsassen-Rückhaltesystem mit einem Gassack 1, der aus zwei Gassackkammern 11, 12 besteht. Die eine Gassackkammer 11 stellt die Hauptkammer des Gassackes bereit und dient im Auslösefall einer Interaktion mit einem zu schützenden Fahrzeuginsassen. Die andere Gassackkammer 12 ist als Zusatzkammer ausgebildet, die über eine Verbindungsöffnung 13 mit der Hauptkammer 11 verbunden ist. Durch die Verbindungsöffnung 13 kann in beiden Richtungen, also sowohl von der Hauptkammer 11 in die Zusatzkammer 12 als auch von der Zusatzkammer 12 in die Hauptkammer 11 Gas strömen.

Die Gassackwandung 121 der Zusatzkammer 12 ist, anders als die Gassackwandung 111 der Hauptkammer 11, aus einem elastischen Material gebildet, so dass die Zusatzkammer 12 bei Vorliegen eines entsprechenden Innendruckes das Volumen erhöhen kann.

In dem dargestellten Ausführungsbeispiel ist der Gassack 1 als Gassack eines Seitenairbags für den Thorax-Abdomenbereich einer zu schützenden Person 2 ausgebildet. Diese Anwendung ist jedoch nur beispielhaft zu verstehen. Zum einen kann es sich ebenfalls um einen Seitenairbag für ein Thorax-, ein Thorax-Pelvis- oder ein Thorax-Kopf-Schutzsystem handeln. Zum anderen kann ein Gassack, der eine elastische Zusatzkammer aufweist, auch in anderen Airbagsystemen z.B. in Frontal-Airbagsystemen eingesetzt werden.

Bei einem Seitenairbagsystem ist die Zusatzkammer 12 beispielsweise seitlich zwischen der Fahrzeuglehne und der Fahrzeugtür angeordnet.

Im Auslösefall wird bei dem betrachteten Ausführungsbeispiel mittels eines nicht dargestellten Inflators Gas in die Hauptkammer 11 eingeführt, wobei dieses Gas aufgrund der Verbindungsöffnung 13 auch in die Zusatzkammer 12 strömt. Für den Fall einer Belastung der Hauptkammer 11, beispielsweise aufgrund einer schützenden Interaktion mit einem Fahrzeuginsassen, erhöht sich der Druck in der Hauptkammer 11 und damit auch in der Nebenkammer 12 kurzfristig. Der erhöhte Druck führt dazu, dass die elastische Zusatzkammer 12 expandiert und sich unter Volumenvergrößerung aufbläst. Bei Entlastung der Hauptkammer 11, also wenn der erhöhte Außendruck auf die Hauptkammer 11 nicht mehr vorliegt, und dementsprechend auch der Innendruck der Hauptkammer 11 reduziert ist, reduziert sich das Volumen der elastischen Zusatzkammer 12 mit der Folge, dass Gas von der Zusatzkammer 12 in die Hauptkammer 11 zurückströmt und dort den Innendruck wieder erhöht.

Statt eines Ausströmens des Gases im Interaktionsfall mit einem Insassen in die freie Umgebung, wie es der Stand der Technik vorsieht, wird bei dieser Ausgestaltung Gas temporär in einer elastischen Zusatzkammer abgespeichert und nach Wegfall der Belastung bzw. der Interaktion mit dem Fahrzeuginsassen wieder zurück in die Hauptkammer geführt, so dass dort erneut ein hoher Druck zur Energieabsorption bereitsteht. Hierdurch wird eine Schutz auch bei weiteren Kollisionen und Aufschlägen bereitgestellt, wie es beispielsweise erforderlich ist, wenn mehrere Autos ineinander fahren und nacheinander starke Kräfte auf das Kraftfahrzeug und dessen Insassen wirken.

Es wird darauf hingewiesen, dass bei der Ausgestaltung der Figur 1 alternativ zwischen der Hauptkammer 11 und der Zusatzkammer 12 auch ein druckgesteuertes Ventil vorgesehen sein kann. Ein solches Ventil 14 ist in der Figur 1 gestrichelt dargestellt, was den optionalen Charakter wiedergibt. Ein solches Ventil 14 würde bevorzugt druckgesteuert in dem Sinne sein, dass erst mit Vorliegen eines vorbestimmten Innendruckes in der Hauptkammer 11 Luft in die Zusatzkammer 12 strömen kann. Beispielsweise wird ein solches Ventil 14 durch eine Ausströmöffnung in der Hauptkammer 11 realisiert, die mit einer Abdeckung verschlossen ist, die bei Vorliegen eines vorbestimmten Druckes reißt. Eine solche Ausgestaltung würde den Vorteil aufweisen, dass in der Hauptkammer 11 aufgrund des insgesamt geringeren Volumens ein höherer Druck vorliegen würde als im Fall, dass Hauptkammer 11 und Zusatzkammer 12 von vornherein miteinander verbunden sind. Bei einer Interaktion mit einem Fahrzeuginsassen würde das Ventil 14 öffnen, Luft in die Zusatzkammer 12 strömen und dort zu einer Expansion der Zusatzkammer 12 führen. Insofern kann auf die obigen Ausführungen verwiesen werden.

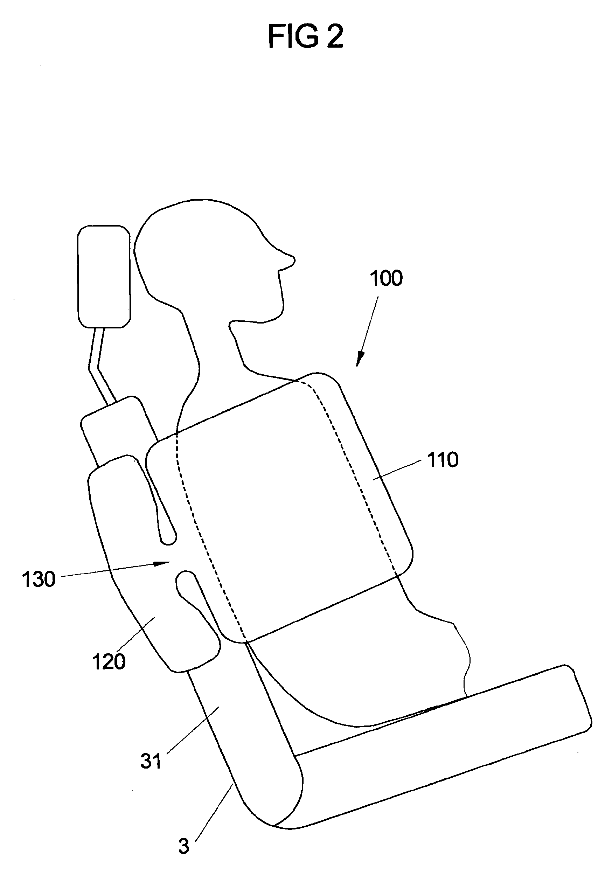

Die Figur 2 zeigt einen Seitenairbag 100, der aus einer Hauptkammer 110 und einer Zusatzkammer 120 besteht, die durch eine Durchgangsöffnung 130 miteinander verbunden sind. Das Airbagmodul mit dem Gassack 100 ist in die Sitzlehne 31 eines Fahrzeugsitzes 3 integriert. Im Auslösefall, bei einem Befüllen bzw. Expandieren des Gassackes 100, ist die Zusatzkammer 120 zwischen der B-Säule des Fahrzeugs (nicht gesondert dargestellt) und der Sitzlehne 31 angeordnet.

Es ist nun vorgesehen, dass im Auslösefall die Hauptkammer 110 und damit auch die Zusatzkammer 120 derart mit Gas gefüllt wird, dass das Druckniveau in der Hauptkammer 110 relativ niedrig liegt und dadurch insbesondere OOP-Fälle unkritisch sind. Im Falle einer ernsthaften Fahrzeugkollision, bei der das Fahrzeug im Bereich der B-Säule von einem anderen Fahrzeug angefahren wird und dementsprechend die B-Säule intrudiert, wird die zwischen der B-Säule und dem Fahrzeugsitz 31 angeordnete Zusatzkammer 120 komprimiert, so dass das in der Zusatzkammer 120 befindliche Gas jedenfalls zum Teil in die Hauptkammer 110 strömt und dort den Druck erhöht. Während bei fehlender Intrusion (einhergehend mit kleineren Unfällen im Seitenbereich) oder bei einer Fehlauslösung somit das Druckniveau der Hauptkammer 110 OOP-unkritisch ist, wird bei einer Kollision, die mit einer Intrusion der B-Säule einhergeht, der Druck in der Hauptkammer 110 erhöht und dadurch eine erhöhte Energieabsorption durch die Hauptkammer 110 ermöglicht. Es wird somit ein System bereitgestellt, dessen Innendruck intrusionsgesteuert ist.

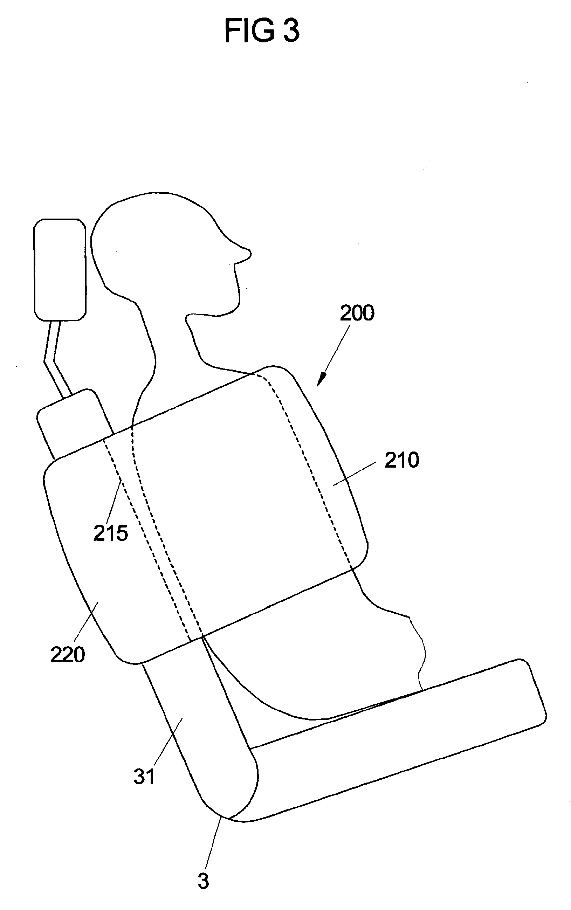

Das in der Figur 3 dargestellte Ausführungsbeispiel unterscheidet sich insofern von dem Ausführungsbeispiel der Figur 2, als der Gassack 200 nicht als Mehrkammer-Gassack, sondern einteilig ausgebildet ist. Dabei bildet der Gassack 200 einen Hauptbereich 210, der in Interaktion mit dem zu schützenden Fahrzeuginsassen treten kann, sowie einen Zusatzbereich 220, der aufgrund seiner Position und Lage im entfalteten Zustand nicht in Interaktion mit dem Fahrzeuginsassen treten kann. Die in der Figur 3 dargestellte Trennlinie 215 zwischen den beiden Bereichen 210, 220 ist keine tatsächliche Linie oder Abnähung, sondern soll nur die Lage der beiden Bereiche 210, 220 verdeutlichen.

Der Zusatzbereich 220 ist ebenso wie in der Figur 2 zwischen der B-Säule und der Sitzlehne 31 des Fahrzeugsitzes 3 angeordnet, so dass er bei einem Intrudieren der B-Säule zusammengedrückt wird und dementsprechend Gas in den ersten Bereich 210 geleitet wird. Die beschriebene Funktion ist die gleiche wie bei der Ausgestaltung der Figur 2.

## Patentansprüche

1. Fahrzeuginsassen-Rückhaltesystem mit einem Gassack, der eine erste Gassackkammer und eine zweite Gassackkammer aufweist, die mit Gas befüllbar sind, wobei
- die erste Gassackkammer eine Hauptkammer bildet, die im Auslösefall in Interaktion mit einem Fahrzeuginsassen tritt,
- die erste und die zweite Gassackkammer (11, 12) derart miteinander verbunden sind, dass in Abhängigkeit von den vorliegenden Innendrücken Gas von der ersten Gassackkammer (11) in die zweite Gassackkammer (12) und Gas von der zweiten Gassackkammer (12) in die erste Gassackkammer (11) strömen kann, und
- die zweite Gassackkammer (12) eine elastische Wandung (121) aufweist,
**dadurch gekennzeichnet, dass**
- der Gassack (1) als Seitenairbag ausgebildet ist, der in die Sitzlehne eines Fahrzeugsitzes integriert ist, wobei die zweite Gassackkammer (12) des entfalteten Gassacks sich zwischen der Sitzlehne und einer zugehörigen Fahrzeugstruktur erstreckt, und
- die zweite Gassackkammer (12) derart ausgebildet und im Fahrzeug positioniert ist, dass sie nicht in Interaktion mit einem Fahrzeuginsassen treten kann.

2. Fahrzeuginsassen-Rückhaltesystem nach Anspruch 1, **dadurch gekennzeichnet, dass** die Verbindung (13, 14) zwischen der ersten Gassackkammer (11) und der zweiten Gassackkammer (12) derart ausgebildet ist, dass erst ab einem vorbestimmten Druck in der ersten Gassackkammer (11) Gas von der ersten Gassackkammer (11) in die zweite Gassackkammer (12) strömen kann, wobei anschließend in Abhängigkeit von den vorliegenden Innendrücken auch Gas von der zweiten Gassackkammer (12) in die erste Gassackkammer (11) strömen kann.

3. Verfahren zum Verteilen von Gas zwischen zwei Gassackkammern eines Gassacks mit folgenden Schritten:
- Bereitstellen eines Gassacks (1) mit mindestens einer ersten Gassackkammer (11) und einer zweiten Gassackkammer (12), wobei die zweite Gassackkammer (12) eine elastische Wandung (121) aufweist,
- Anordnen des Gassacks (1) in einem Fahrzeug derart, dass die erste Gassackkammer (11) im Auslösefall in Interaktion mit einem Fahrzeuginsassen tritt,
- im Auslösefall, Bereitstellen eines Innendruckes zumindest in der ersten Gassackkammer (11), wobei Gas mittels eines Inflators zunächst in die erste Gassackkammer (11) eingeführt wird,
- bei Intrusion oder Belastung der ersten Gassackkammer (11), Strömen von Gas von der ersten Gassackkammer (11) in die zweite Gassackkammer (12), wobei die zweite Gassackkammer (12) elastisch expandiert,
- bei Wegfall der Intrusion oder Belastung der ersten Gassackkammer (11), Strömen von Gas von der zweiten Gassackkammer (12) zurück in die erste Gassackkammer (11).

4. Fahrzeuginsassen-Rückhaltesystem mit einem Gassack, der einen ersten Teilbereich (110, 210) und einen zweiten Teilbereich (120, 220) aufweist, die mit Gas befüllbar sind, wobei der erste Teilbereich (110, 210) im Auslösefall in Interaktion mit einem Fahzeuginsassen tritt und der zweite Teilbereich (120, 220) des entfalteten Gassacks (100, 200) derart ausgebildet und im Fahrzeug positioniert ist, dass er nicht in Interaktion mit einem Fahrzeuginsassen treten kann,
**dadurch gekennzeichnet, dass**
der zweite Teilbereich (120, 220) des entfalteten Gassacks (100, 200) derart ausgebildet und im Fahrzeug positioniert ist, dass er durch mindestens ein intrudierendes Fahrzeugteil komprimierbar ist, wobei bei Intrusion des Fahrzeugteils Gas des zweiten Teilbereichs (120, 220) in den ersten Teilbereich (110, 210) geleitet wird und dort den Druck erhöht.

5. Fahrzeuginsassen-Rückhaltesystem nach Anspruch 4, **dadurch gekennzeichnet, dass** der zweite Teilbereich (120, 220) derart ausgebildet und im Fahrzeug positioniert ist, dass er bei Intrusion einer Fahrzeugsäule durch diese komprimiert wird.

6. Fahrzeuginsassen-Rückhaltesystem nach Anspruch 4 oder 5, **dadurch gekennzeichnet, dass** der Innendruck des ersten Teilbereichs (110, 210), sofern in ihn nicht Gas des zweiten Teilbereichs (120, 220) geleitet ist, OOP-unkritisch ist.

7. Fahrzeuginsassen-Rückhaltesystem nach einem der Ansprüche 4 bis 6, **dadurch gekennzeichnet, dass** der erste Teilbereich (110) und der zweite Teilbereich (120) durch zwei Gassackkammern gebildet sind, wobei die Gassackkammer (110), die den ersten Teilbereich bildet, als Hauptkammer dient, und die Gassackkammer (120), die den zweiten Teilbereich bildet, als Zusatzkammer dient.

8. Fahrzeuginsassen-Rückhaltesystem nach einem der Ansprüche 4 bis 7, **dadurch gekennzeichnet, dass** der Gassack (100, 200) als Seitenairbag ausgebildet ist, wobei der zweite Teilbereich (120, 220) des entfalteten Gassacks sich zwischen der B-Säule und dem zugehörigen vorderen Fahrzeugsitz (3) erstreckt.

9. Verfahren zum Erhöhen des Innendruckes in einem Teilbereich eines Gassacks, der im Auslösefall in Interaktion mit einem Fahrzeuginsassen tritt, mit folgenden Schritten:
- Bereitstellen eines Gassacks (100, 200) mit mindestens einem ersten Teilbereich (110, 210) und einem zweiten Teilbereich (120, 220),
- Anordnen das Gassacks (100, 200) in einem Fahrzeug derart, dass
i. der zweite Teilbereich (120, 220) des entfalteten Gassacks nicht in Interaktion mit einem Fahrzeuginsassen treten kann und der zweite Teilbereich (120, 220) durch ein intrudierendes Fahrzeugteil komprimierbar ist,
ii. der erste Teilbereich (110, 210) im Auslösefall in Interaktion mit einem Fahrzeuginsassen tritt,
- im Auslösefall, Bereitstellen eines Innendruckes im ersten Teilbereich (110, 210),
- bei Intrusion des Fahrzeugteils Erhöhen des Innendruckes in dem ersten Teilbereich (110, 210) durch Gas, dass aus dem zweiten Teilbereich (120, 220) in den ersten Teilbereich (110, 210) strömt.

10. Verfahren nach Anspruch 9, **dadurch gekennzeichnet, dass** der Innendruck im ersten Teilbereich (110, 210) OOP-unkritisch ist, bevor Gas aus dem zweiten Teilbereich (120, 220) in den ersten Teilbereich (110, 210) strömt.

## Claims

1. Vehicle occupant restraint system with an airbag which has a first airbag chamber and a second airbag chamber which can be filled with gas, wherein
- the first airbag chamber forming a main chamber which, in the event of being triggered, comes into interaction with a vehicle occupant,
- the first and the second airbag chambers (11, 12) are connected to each other in such a manner that, as a function of the internal pressures present, gas can flow from the first airbag chamber (11) into the second airbag chamber (12) and gas can flow from the second airbag chamber (12) into the first airbag chamber (11), and
- the second airbag chamber (12) has an elastic wall (121),
**characterized in that**
- the airbag (1) is designed as a side airbag which is integrated in the seatback of a vehicle seat, with the second airbag chamber (12) of the deployed airbag extending between the seatback and an associated vehicle structure, and
- the second airbag chamber (12) is designed and positioned in the vehicle in such a manner that it cannot come into interaction with a vehicle occupant.

2. Vehicle occupant restraint system according to Claim 1, **characterized in that** the connection (13, 14) between the first airbag chamber (11) and the second airbag chamber (12) is designed in such a manner that only from a predetermined pressure in the first airbag chamber (11) is it possible for gas to flow from the first airbag chamber (11) into the second airbag chamber (12), with it subsequently also being possible, as a function of the internal pressures present, for gas to flow from the second airbag chamber (12) into the first airbag chamber (11).

3. Method for distributing gas between two airbag chambers of an airbag, with the following steps:
- providing an airbag (1) with at least one first airbag chamber (11) and one second airbag chamber (12), the second airbag chamber (12) having an elastic wall (121),
- arranging the airbag (1) in a vehicle in such a manner that, in the event of being triggered, the first airbag chamber (11) comes into interaction with a vehicle occupant,
- in the event of being triggered, providing an internal pressure at least in the first airbag chamber (11), wherein gas is introduced by means of an inflator at first into the first airbag chamber (11),
- upon intrusion or loading of the first airbag chamber (11), gas flowing from the first airbag chamber (11) into the second airbag chamber (12), with the second airbag chamber (12) expanding elastically,
- when the intrusion or loading of the first airbag chamber (11) ceases, gas flowing from the second airbag chamber (12) back into the first airbag chamber (11).

4. Vehicle occupant restraint system with an airbag which has a first partial region (110, 210) and a second partial region (120, 220) which can be filled with gas, the first partial region (110, 210), in the event of being triggered, coming into interaction with a vehicle occupant, and the second partial region (120, 220) of the deployed airbag (100, 200) being designed and positioned in the' vehicle in such a manner that it cannot come into interaction with a vehicle occupant,
**characterized in that**
the second partial region (120, 220) of the deployed airbag (100, 200) being designed and positioned in the vehicle in such a manner that it can be compressed by at least one intruding vehicle part, with, upon intrusion of the vehicle part, gas from the second partial region (120, 220) being conducted into the first partial region (110, 210) and increasing the pressure there.

5. Vehicle occupant restraint system according to Claim 4, **characterized in that** the second partial region (120, 220) is designed and positioned in the vehicle in such a manner that, upon intrusion of a vehicle pillar, it is compressed by the latter.

6. Vehicle occupant restraint system according to Claim 4 or 5, **characterized in that** the internal pressure of the first partial region (110, 210) is noncritical with regard to an occupant being out of position unless gas from the second partial region (120, 220) is conducted into it.

7. Vehicle occupant restraint system according to one of Claims 4 to 6, **characterized in that** the first partial region (110) and the second partial region (120) are formed by two airbag chambers, the airbag chamber (110) which forms the first partial region serving as main chamber, and the airbag chamber (120) which forms the second partial region serving as additional chamber.

8. Vehicle occupant restraint system according to one of Claims 4 to 7, **characterized in that** the airbag (100, 200) is designed as a side airbag, with the second partial region (120, 220) of the deployed airbag extending between the B-pillar and the associated front vehicle seat (3).

9. Method for increasing the internal pressure in a partial region of an airbag, which, in the event of being triggered, comes into interaction with a vehicle occupant, with the following steps:
- providing an airbag (100, 200) with at least one first partial region (110, 210) and one second partial region (120, 220),
- arranging the airbag (100, 200) in a vehicle in such a manner that,
i. the second partial region (120, 220) of the deployed airbag cannot come into interaction with a vehicle occupant and the second partial region (120, 220) can be compressed by an intruding vehicle part,
ii. the first partial region (110, 210), in the event of being triggered, comes into interaction with a vehicle occupant,
- in the event of being triggered, providing an internal pressure in the first partial region (110, 210),
- upon intrusion of the vehicle part, increasing the internal pressure in the first partial region (110, 210) by means of gas which flows from the second partial region (120, 220) into the first partial region (110, 210).

10. Method according to Claim 9, **characterized in that** the internal pressure in the first partial region (110, 210) is noncritical with regard to an occupant being out of position before gas flows from the second partial region (120, 220) into the first partial region (110, 210).

## Revendications

1. Système de retenue de passager de véhicule comprenant un coussin gonflable, qui comporte une première chambre de coussin et une seconde chambre de coussin qui peuvent être remplies de gaz, dans lequel
- la première chambre de coussin forme une chambre principale qui, en cas de déclenchement, vient en interaction avec un passager du véhicule,
- la première et la seconde chambre de coussin (11, 12) sont reliées l'une à l'autre de telle façon que, en fonction des pressions intérieures en présence, du gaz peut s'écouler de la première chambre de coussin (11) dans la seconde chambre de coussin (12), et du gaz peut s'écouler de la seconde chambre de coussin (12) dans la première chambre de coussin (11), et
- la seconde chambre de coussin (12) comprend une paroi élastique (121),
**caractérisé en ce que**
- le coussin gonflable (1) est réalisé à la manière d'un airbag latéral qui est intégré dans le dossier d'un siège du véhicule, et la seconde chambre de coussin (12) du coussin gonflable déployé s'étend entre le dossier et une structure du véhicule associé, et
- la seconde chambre de coussin (12) est réalisée et positionnée dans le véhicule d'une manière telle qu'elle ne peut pas venir en interaction avec un passager du véhicule.

2. Système de retenue de passager de véhicule selon la revendication 1, **caractérisé en ce que** la liaison (13, 14) entre la première chambre de coussin (11) et la seconde chambre de coussin (12) est réalisée de telle manière que du gaz peut s'écouler de la première chambre de coussin (11) dans la seconde chambre de coussin (12) seulement à partir d'une pression prédéterminée dans la première chambre de coussin (11), et ensuite, en fonction des pressions intérieures en présence, du gaz peut également s'écouler de la seconde chambre de coussin (12) dans la première chambre de coussin (11).

3. Procédé pour répartir du gaz entre deux chambres de coussin d'un coussin gonflable, avec les étapes suivantes :
- préparation d'un coussin gonflable (1) avec au moins une première chambre de coussin (11) et une seconde chambre de coussin (12), telles que ladite seconde chambre de coussin (12) comporte une paroi élastique (121),
- agencement du coussin gonflable (1) dans un véhicule de telle façon que la première chambre de coussin (11) vient, en cas de déclenchement, en interaction avec un passager du véhicule,
- en cas de déclenchement, établissement d'une pression intérieure au moins dans la première chambre de coussin (11), du gaz étant introduit au moyen d'un générateur de gaz tout d'abord dans la première chambre de coussin (11),
- en cas d'intrusion ou de mise en charge de la première chambre de coussin (11), écoulement de gaz de la première chambre de coussin (11) dans la seconde chambre de coussin (12), de sorte que la seconde chambre de coussin (12) se dilate de manière élastique,
- lors de la cessation de l'intrusion ou de la mise en charge de la première chambre de coussin (11), écoulement de gaz en retour de la seconde chambre de coussin (12) dans la première chambre de coussin (11).

4. Système de retenue de passager de véhicule comprenant un coussin gonflable, qui comprend une première région partielle (110, 210) et une seconde région partielle (120, 220), qui peuvent être remplies de gaz, telles que la première région partielle (110, 210) vient, en cas de déclenchement, en interaction avec un passager du véhicule, et la seconde région partielle (120, 220) du coussin gonflable déployé (100, 200) est réalisée et positionnée dans le véhicule de telle façon qu'elle ne peut pas venir en interaction avec un passager du véhicule,
**caractérisé en ce que**
la seconde région partielle (120, 220) du coussin gonflable déployé (100, 200) est réalisée et positionnée dans le véhicule de telle façon qu'elle peut être comprimée par au moins une pièce du véhicule qui fait intrusion, et lors de l'intrusion de la pièce de véhicule, du gaz est conduit de la seconde région partielle (120, 220) dans la première région partielle (110, 210) et augmente la pression dans celle-ci.

5. Système de retenue de passager de véhicule selon la revendication 4, **caractérisé en ce que** la seconde région partielle (120, 220) est réalisée et positionnée dans le véhicule de telle façon que, lors de l'intrusion d'un montant du véhicule, elle est comprimée par celui-ci.

6. Système de retenue de passager de véhicule selon la revendication 4 ou 5, **caractérisé en ce que** la pression intérieure de la première région partielle (110, 210), pour autant que du gaz de la seconde région partielle (120, 220) ne lui soit pas amené, n'est pas critique vis-à-vis d'un passager "hors de position".

7. Système de retenue de passager de véhicule selon l'une des revendications 4 à 6, **caractérisé en ce que** la première région partielle (110) et la seconde région partielle (120) sont formées par deux chambres de coussin, telles que la chambre de coussin (110) qui forme la première région partielle sert de chambre principale, et que la chambre de coussin (120) qui forme la seconde région partielle sert de chambre additionnelle.

8. Système de retenue de passager de véhicule selon l'une des revendications 4 à 7, **caractérisé en ce que** le coussin gonflable (100, 200) est réalisé sous forme d'airbag latéral, et tel que la seconde région partielle (120, 220) du coussin gonflable déployé s'étend entre le montant médian B et le siège avant associé du véhicule (3).

9. Procédé pour augmenter la pression intérieure dans une région partielle d'un coussin gonflable qui, en cas de déclenchement, vient en interaction avec un passager d'un véhicule, comprenant les étapes suivantes :
- préparation d'un coussin gonflable (100, 200) avec au moins une première région partielle (110, 210) et une seconde région partielle (120,220),
- agencement du coussin gonflable (100, 200) dans un véhicule de telle façon que
i) la seconde région partielle (120, 220) du coussin gonflable déployé ne peut pas venir en interaction avec un passager du véhicule, et la seconde région partielle (120, 220) est susceptible d'être comprimée par une pièce du véhicule qui fait intrusion,
ii) la première région partielle (110, 210) vient, en cas de déclenchement, en interaction avec un passager du véhicule,
- en cas de déclenchement, préparation d'une pression intérieure dans la première région partielle (110, 210),
- en cas d'intrusion de la pièce de véhicule, augmentation de la pression intérieure dans la première région partielle (110, 210) au moyen de gaz qui s'écoule en sortant de la seconde région partielle (120, 220) pour entrer dans la première région partielle (110, 210).

10. Procédé selon la revendication 9, **caractérisé en ce que** la pression intérieure dans la première région partielle (110, 210) n'est pas critique vis-à-vis d'un passager "hors de position" avant que du gaz s'écoule de la seconde région partielle (120, 220) dans la première région partielle (110,210).
